# EUROPÄISCHE PATENTSCHRIFT

(11) **EP 1 820 390 B1**
(45) Veröffentlichungstag und Bekanntmachung des Hinweises auf die Patenterteilung: **18.11.2009**
(21) Anmeldenummer: 06126473.5
(22) Anmeldetag: 19.12.2006
(51) Int. Cl.: A01F 12/30

(54) **Mähdrescher mit mehrstufigem Trennbereich**
Combine-harvester with multi-stage separating zone
Moissonneuse-batteuse avec zone de séparation multi-étagée

(30) Priorität: 17.02.2006 DE 102006007810
(43) Veröffentlichungstag der Anmeldung: 22.08.2007
(73) Patentinhaber: CLAAS Selbstfahrende Erntemaschinen GmbH, 33428 Harsewinkel (DE)
(72) Erfinder: Fögeling, Walter, 33442, Herzebrock-Clarholz (DE); Aerdker, Bernhard, 48231, Warendorf (DE); Korte, Hubert, Dr., 48346, Ostbevern (DE)

(56) Entgegenhaltungen:
- DE-A1- 2 254 461
- US-A- 546 372

## Beschreibung

Die Erfindung betrifft einen Mähdrescher mit einem mehrstufigen Trennbereich nach dem Oberbegriff des Anspruchs 1.

Hordenschüttler mit einem mehrstufig ausgeführten Trennbereich sind unter anderem aus der DE 22 54 461 bekannt geworden. Ein konventioneller, sogenannter Tangentialmahdrescher verfügt über ein Ein- oder Mehrtrommeldreschwerk welchem in seinem rückwärtigen Bereich oben- oder untenseitig eine aus einer Gutumlenkwalze bestehende Gutumlenkeinrichtung zugeordnet ist. Die Gutumlenkeinrichtung selbst ist im Übergabebereich zwischen den Dreschorganen und zwei in vertikaler Richtung übereinander angeordneten, den Trennbereich bildenden Hordenschüttlern positioniert.

Aus der DE 2254461 ist weiter ein Mähdrescher bekannt geworden, dessen Dreschorganen ein in zwei Ebenen arbeitendes Abscheldeorgan zu geordnet ist. Weiter sind erste und zweite Verteilorgane vorgesehen, die den Erntegutstrom den beiden Ebenen des Abscheldeorgans zuführen, wobei das weitere als Zinken ausgeführte Verteilorgan die Aufteilung des Erntegutstromes auf beide Ebenen des Abscheideorgans unterstützt. Ein wesentlicher Nachteil dieses weiteren Verteilorgans ist es, dass eine Homogenisierung der Breitvertellung des oder der Erntegutströme auf der jeweiligen Abscheideebene nicht unterstützt.

In einer ersten Ausführungsform wird der aus dem Dreschbereich austretende Gutstrom von einer untenseitig dem Dreschbereich zugeordneten Gutumlenkwalze erfasst und über einen Zinkenrechen einer ersten und einer zweiten Trennebene zugeführt, Die Zinken sind dabei wechselweise entweder auf den oberen oder den unteren Hordenschüttler ausgerichtet. Eine solche Ausführung hat insbesondere den Nachteil, dass die stark vernetzte Gutmatte mittels der Gutumlenkwalze an den Zinken in eine Vielzahl von Teilströmen aufgeteilt werden und teilweise durch die Zinken der oberen Zinkenebene hindurchgepresst werden muss, Dabei erfordert die Aufteilung des Erntegutstromes in diese Vielzahl von Erntegutteilströmen einen erheblichen Energieeinsatz. Zudem wird wegen der vernetzten Struktur der Erntegutmatte nur ein unbefriedigendes Trennergebnis des Erntegutstromes in die erforderlichen Erntegutteilströme erzielt, was letztlich eine ungleichmäßige Beschickung der verschiedenen Trennebenen zur Folge hat Die Anordnung der Gutumlenkeinrichtung unterhalb der Dreschorgane hat zudem den Nachteil, dass die Dreschorgane eine in vertikaler Richtung hohe Position einnehmen müssen, sodass zunächst eine erhebliche Förderarbeit aufgewendet werden muss, um den geernteten Gutstrom in die hohe Position der Dreschorgane zu transportieren,

In der weiteren Ausführungsform soll dieser Nachteil dadurch behoben werden, dass den Dreschorganen in an sich bekannter Weise eine Gutumlenktrommel zugeordnet ist, die den gesamten aus dem Dreschbereich austretenden Gutstrang einem einzigen Hordenschüttler zuführt. Dieser Hordenschüttler ist jedoch in seinem gutannahmeseitigen Bereich in offener Bauweise ausgeführt, sodass zumindest ein Teil des auf den oberen Hordenschüttler gelangenden Erntegutstromes durch diesen hindurchtritt und auf den unteren Hordenschüttler gelangt Wegen der oszillierenden Bewegung der Hordenschüttler hat eine solche Ausführung vor allem den Nachteil, dass das Erntegut nur sporadisch durch den Freiraum der bewegten Horden des oberen Hordenschüttlers gelangt, sodass auch hier eine kontinuierliche und gleichmäßige Aufteilung des Erntegutstromes auf die verschiedenen Trennebenen nicht gegeben ist.

Der vorliegenden Erfindung liegt daher die Aufgabe zugrunde, die im Stand der Technik beschriebenen Nachteile zu vermeiden und insbesondere eine Vorrichtung zu schaffen, die eine effiziente und nahezu gleichmäßige Aufteilung eines Erntegutstromes auf eine Vielzahl von Trennebenen ermöglicht.

Indem dem Dreschbereich gutabgabeseitig ein mit einem in Gutflussrichtung zumindest einen ersten und einen weiteren Gutdurchtrittsbereich aufweisenden Gutleitelement zusammenwirkendes Gutförderorgan zugeordnet ist und das Gutförderorgan den Erntegutstrom in der Weise umlenkt, dass jedem Gutdurchtrittsbereich Emtegutteilsträme zugeführt werden , wird sichergestellt, dass eine effiziente und nahezu gleichmäßige Aufteilung eines Erntegutstromes auf eine Vielzahl von Trennebenen mittels eines einzigen Gutförderorgans möglich wird,

Eine vorteilhafte Weiterbildung der Erfindung ergibt sich dann, wenn das Gutförderorgan den Erntegutstrom in Erntegutteilströme aufteilt und diese Erntegutteilströme wenigsten teilweise umlenkt und beschleunigt, Dies hat insbesondere den Vorteil, dass die Nachbeschteunigung der Emtegutteilströme einen störungsarmen Gutfluss im Bereich des Gutförderorgans begünstigt.

Eine konstruktiv einfache Ausführung der Erfindung ergibt sich dann, wenn das Gutförderorgan als Gutleittrommel ausgeführt ist.

In einer vorteilhaften Ausgestaltung der Erfindung wird der in Gutflussrichtung nachgeordnete weitere Gutdurchtrittsbereich untenseitig wenigstens teilweise durch das Gutleitelement und obenseitig wenigstens teilweise durch ein Gutverteilorgan begrenzt, sodass mit einer sehr geringen Anzahl an Gutleiteiririchtungen ein sicheres Umlenken und Fördern der Erntegutteilströme realisierbar ist. In analoger Weise stellt sich dieser störungsarme Gutfluss in dem vorgeordneten Gutdurchtrittsbereich ein, wenn dem Gutleitelement in diesem Bereich ebenfalls in Bewegungsrichtung des Erntegutteilstromes ein Gutverteilorgan zugeordnet ist.

Eine konstruktiv einfache Ausgestaltung der Gutförderorgane ergibt sich dann, wenn das Gutverteilorgan des vorgeordneten Gutdurchtrittsbereichs als Verteilerklappen und das Gutverteilorgan der nachgeordneten Gutdurchtrittsöffnung als Verteilerhaube ausgeführt ist.

Damit der jeweilige Erntegutteilstrom möglichst homogen über die Arbeitsbreite der jeweiligen Trennebene verteilbar ist, sind in einer vorteilhaften Ausgestaltung der Erfindung der Verteilerhaube Leitschienen zugeordnet, wobei die Leitschienen und die Verteilerklappen der jeweiligen Gutdurchtrittsöffnung in Bewegungsrichtung des durchtretenden Erntegutteilstromes einstellbar sind.

Um die Gutmitnahmeintensität der Gutleittrommel flexibel an unterschiedliche Ernteguteigenschaften anpassen zu können, ist in einer vorteilhaften Ausgestaltung vorgesehen, dass das Gutleitelement und die Gutleittrommel zwischen sich einen Durchgangsspalt ausbilden und der Durchgangsspalt einstellbar ist. In einer bevorzugten Ausgestaltung kann diese Einstellbarkeit des Durchgangsspaltes dadurch bewirkt werden, dass die Gutleittrommel und/oder das Gutleitelement in ihrer Lage veränderbar sind, Mittels einer solchen Ausführung kann sichergestellt werden, dass auch sich ändernde Guteigenschaften keine Störungen im Gutfluss hervorrufen, da das System rechtzeitig an derartige Änderungen anpassbar ist.

Indem die Abscheideebene des Dreschbereichs als Dresch- und Abscheidekorb ausgebildet ist und die Abscheideebene sich wenigstens teilweise in den Wirkbereich der Gutleittrommel erstreckt und wobei das oder die Gutleitelemente die Abscheideebene wenigstens teilweise überdecken, wird eine bauraumsparende, sehr kompakte und leicht montier- und demontierbare Ausführung der Erfindung realisiert. Dieser Effekt lässt sich auch dadurch noch steigern, wenn das Gutleitelement mehrteilig ausgeführt ist.

Zur Intensivierung der Kornabschetdurtg kann ferner vorgesehen sein, dass die verschlossenen Abschnitte des Gutleitelementes wenigstens teilweise von Korndurchtrittsöffnungen durchsetzt sind.

Damit die einzelnen Trennebenen nahezu die gleiche Abscheideeffizienz aufweisen, wird in einer vorteilhaften Ausgestaltung der Erfindung die Breite der Gutdurchtrittsöffnung so gewählt, dass der Erntegutstrom in nahezu gleiche Anteile von Erntegutteilströmen für die einzelnen Trennebenen aufteilbar ist. Eine besonders flexible Anpassung an verschiedene Ernteguteigenschaften wird in diesem Zusammenhang dann erreicht, wenn die Breite der Gutdurchtrittsöffnung einstellbar ist.

Ein besonders flexibler Einsatz der Erfindung ergibt sich dann, wenn die Trennebenen als Hordenschüttler oder Trennrotoren ausgebildet sind.

Um eine bauraumsparende Ausführung eines Mähdrescher mit mehreren Trennebenen zu erhalten, ist in einer vorteilhaften Ausgestaltung der Erfindung vorgesehen, dass die in den nachgeordneten Trennebenen abgeschiedenen Körnerströme jeweils im Bereich der verschlossenen Abschnitte des Gutleitelementes durch die vorgeordnete Trennebene gefördert und nachfolgenden Arbeitsorganen zugeführt werden, In diesem Zusammenhang hat es sich als Vorteil erwiesen, wenn jedem Hordenschüttler ein Rücklaufboden zugeordnet ist und der Rücklaufboden der jeweils nachgeordneten Trennebene im Bereich der ihm vorgeordneten Trennebene entsprechend den verschlossenen Abschnitten des Gutleitelementes in dieser Trennebene geteilt ausgeführt ist

In vorteilhafter Weiterbildung der Erfindung kann die Kornabscheideeffektivität eines Mähdreschers mit mehreren Trennebenen auch dadurch noch erhöht werden, wenn jeweils dem Rücklaufboden eines Hordenschüttlers einer nachgeordneten Trennebene Gutauflockerungseleimente für die Erntegutteitströme der vorgeordneten Trennebene untenseitig zugeordnet sind.

Eine erhebliche Reduzierung der von den Hordenschüttlerbewegungen verursachten Vibrationen des Mähdreschers an sich kann in vorteilhafter Ausgestaltung der Erfindung dadurch erreicht werden, dass die Bewegung der die Trennebenen bildenden Hordenschüttler so aufeinander abgestimmt ist, dass sich eine zumindest teilweise Massenkräftekompensation einstellt.

Damit in der Emteprozesskette nachfolgende Bearbeitungen, wie insbesondere das Verpressen des aus dem Mähdrescher geförderten Strohs handhabbare Ballengrößen ermöglicht, wird ist in einer weiteren vorteilhaften Ausgestaltung der Erfindung vorgesehen, dass die Erntegutteilfströme der einzelnen Trennebenen einer gesonderten Verwertung zugeführt werden.

Weitere vorteilhafte Ausgestaltungen sind Gegenstand weiterer Unteransprüche und werden nachfolgend anhand von Zeichnungen näher erläutert.

### Es zeigen:

- Figur 1: einen Mähdrescher in Seitenansicht mit erfindungsgemäßem Gutleitelement
- Figur 2: eine Detailansicht des erfindungsgemäßen Gutleitelementes
- Figur 3: eine weitere Detailansicht des erfindungsgemäßen Gutleitelementes

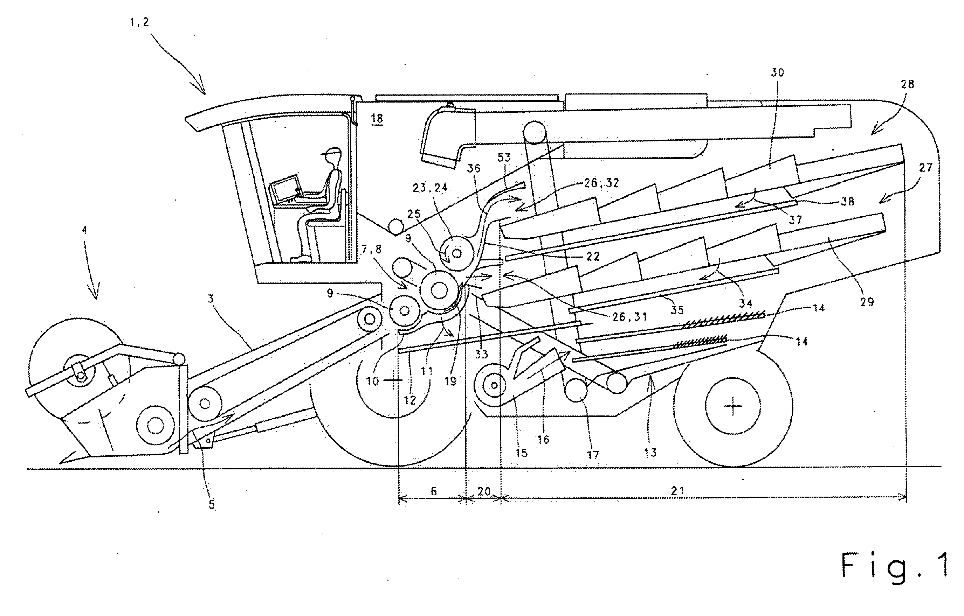

In Fig. 1 ist eine als Mähdrescher 2 ausgeführte landwirtschaftliche Erntemaschine 1 dargestellt deren frontseitig angeordneter Schrägförderer 3 das von einem beliebig ausgeführten Vorsatzgerät 4 abgeerntete und zu einem Erntegutstrang 5 zusammengeführte Erntegut in seinem rückwärtigen Bereich an eine die im Dreschbereich 6 liegenden Dreschorgane 7 bildendes Dreschwerk 8 übergibt. Dabei wird der Erntegutstrang 5 in an sich bekannter Weise zwischen einer oder mehreren umlaufenden Dreschtrommeln 9 und einer diese zumindest teilweise umschlingenden aus Dresch- und Abscheidekörben gebildeten Abscheideebene 10 hindurchgefördert. Während dieses Fördervorgangs werden die Früchte aus den Fruchtständen herausgelöst und zu einem wesentlichen Teil im Bereich der Abscheideebene 10 zusammen mit Kurzstroh und Spreu als ein erster Erntegutstrom 11 abgeschieden und einem dieser Abscheideebene 10 untenseitig zugeordneten Vorbereitungsboden 12 zugeführt. Über den Vorbereitungsboden 12 gelangt dieser erste Erntegutstrom 11 schließlich in eine Reinigungseinrichtung 13, die mittels oszillierend angetriebener Siebe 14 und durch Gebläse 15 erzeugte Luftströmungen 16 eine Trennung der sogenannten Nichtkornbestandteile von den Früchten, bei der Ernte von Getreide wären das die Körner, realisiert. Während die Nichtkornbestandteite aufgrund der Luftströmung 16 aus der Erntemaschine 1 herausgeblasen werden, werden die gereinigten Körner im einfachsten Fall mittels Förderschnecken 17 aus der Reinigungseinrichtung 13 in an sich bekannter Weise zum Beispiel in eine als Korntank 18 ausgeführte Speichereinrichtung abgefördert.

Ein weiterer Erntegutstrom 19 tritt im rÜckwärtigen Bereich der Dreschorgane 7 aus dem Dreschbereich 6 aus und gelangt in den Übergabebereich 20 zwischen dem Dreschbereich 6 und dem Trennbereich 21. In erfindungsgemäßer Weise wird der Dreschbereich 6 gegenüber dem Trennbereich 21 durch ein noch näher zu beschreibendes Gutleitelement 22 abgegrenzt. Dreschbereichsseitig ist dem Gutleitelement 22 im dargestellten Ausführungsbeispiel in vertikaler Richtung ein Gutförderorgan 23 zugeordnet, weiches gemäß der angegebenen Pfeilrichtung 25 als umlaufend angetriebene Gutfördertrommeln 24 ausgebildet ist. Der Trennbereich 21 des Mähdreschers 2 wird im dargestellten Ausführungsbeispiel durch zwei Trennebenen 27, 28 gebildet, wobei jeder Trennebene 27, 28 ein an sich bekannter Hordenschüttler 29, 30 zugeordnet ist. Es liegt im Rahmen der Erfindung, dass die Hordenschüttler 29, 30 auch durch sogenannte an sich bekannte und deshalb nicht dargestellte Trennrotoren ersetzt sein können. Zur Veranschaulichung der Erfindung wird an Hand der Figur 1 zunächst nur der Gutfluss des aus dem rückwärtigen Bereich der Dreschorgane 7 austretenden Erntegutstromes 19 durch den Mähdrescher 2 beschrieben, Das Gutleitelement 22 umfasst im dargestellten Ausführungsbeispiel zwei Gutdurchtrittsbereiche 26, die von einer unteren Gutdurchtrittsöffnung 31 sowie einer oberen Gutdurchtrittsöffnung 32 gebildet werden. Der mit hoher kinetischer Energie aus dem Dreschbereich 6 austretende Erntegutstrom 19 trifft zunächst auf die den Dreschorganen 7 nachgeordnete Gutfördertrommel 24, wobei im Auftreffbereich des Erntegutstromes 19 zumindest ein erster Erntegutteilstrom 33 aus dem Erntegutstrom 19 abgetrennt und Über die unmittelbar im Bereich der Gutförderirommel 24 angeordnete Gutdurchtnttsöffrtung 31 der unteren Trennebene 27 zugeführt wird. Während der Bewegung dieses Erntegutteilstromes 33 auf dem dieser Trennebene 27 zugeordneten Hordenschüttler 29 wird ein weiterer Erntegutstrom 34 im untenseitigen Bereich dieses Hordenschüttlers 29 abgeschieden, der im Wesentlichen ebenfalls aus Körnern, Kurzstroh und Spreu besteht. Über einen unterhalb dieses Hordenschüttlers 29 angeordneten geneigten Rücklaufboden 35 gelangt dieser Erntegutstrom 34 ebenfalls in die Reinigungseinrichtung 13, wobei, wie bereits beschrieben, die Körner von den Nichtkornbestandteilen getrennt werden.

Der aus dem Dreschbereich 6 austretende Erntegutstrom 19 wird im Bereich der Gutfördertrommel 24 erfindungsgemäß in den bereits beschriebenen Erntegutteilstrom 33 und einen oder mehrere weitere Erntegutteilströme 36 aufgetrennt. Die weiteren Emtegutteilströme 36 werden mittels der Gutfördertrommel 24 so weitergeführt, dass sie in die der unteren Trennebene 27 in Richtung des Erntegutflusses nachgeordnete Trennebene 28 gelangen, Gemäß vorherigen Ausführungen umfasst diese Trennebene 28 ebenfalls einen Hordenschüttler 30, sodass in analoger Weise ein ebenfalls aus Körnern, Kurzstroh und Spreu bestehender Erntegutstrom 37 an diesem Hordenschüttler 30 abgeschieden und über einen weiteren Rücklaufboden 38 in noch näher zu beschreibender Weise der Reinigungseinrichtung 13 zugeführt wird.

Im rückwärtigen Bereich des Mähdreschers 2 werden die nicht verwertbaren Anteile der verschiedenen, über die Hordenschüttler 29, 30 bewegten Erntegutteilströme 33, 36 aus dem Mähdrescher 2 herausgefördert, wobei diese Erntegutteilströme 33, 36 dann im Wesentlichen aus Nichtkornbestandteilen wie Stroh und Spreu bestehen.

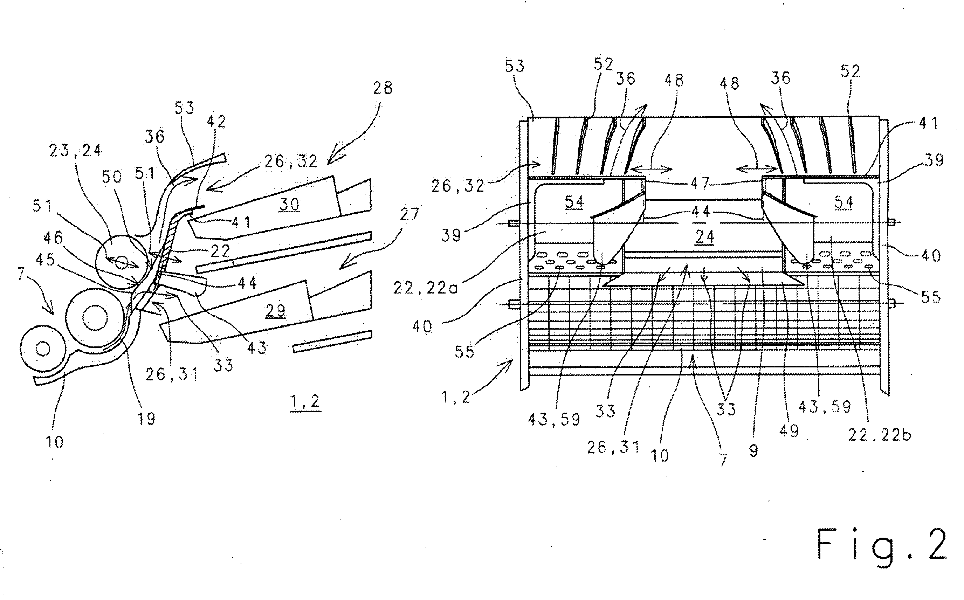

Figur 2 zeigt eine Detailansicht des dem Mähdrescher 2 zugeordneten erfindungsgemäßen Gutleitelementes 22 in einer Seiten- und Rückansicht. Das Gutleitelement 22 ist als dünnwandiges, konturiertes Blech ausgeführt, welches an seinem dem Dreschbereich 6 zugeordneten untenseitigen Ende mit dem rückwärtigen Bereich der Abscheideebene 10 verschraubt ist, wobei im dargestellten Ausführungsbeispiel das Gutleitelement 22 zweiteilig ausgeführt ist und die Gutleitelementsegmente 22a, 22b jeweils so zueinander beabstandet angeordnet sind, dass sich zwischen ihnen die erfindutigsgemäße untere Gutdurchtrittsöffnung 31 ausbildet Weiter stützt sich das Gutleitelemente 22 im dargestellten Ausführungsbeispiel über seitliche Fixierflansche 39 am Maschinenrahmen 40 des Mähdreschers 2 ab und erstreckt sich zudem über die gesamte Arbeitsbreite der Dreschorgane 7. Obenseitig läuft das Gutleitelement 22 in einem abgewinkelten, in Richtung der obersten Trennebene 28 weisenden Führungssteg 41 aus. Der Führungssteg 41 kann einerseits so weit verlängert sein, dass er die untere und die obere Trennebene 27, 28 gegeneinander abgrenzt. Es ist aber auch denkbar, dass für die Abgrenzung der Trennebenen 27, 28 zueinander dem Führungssteg 41 beispielsweise ein Führungsrechen 42 lösbar zugeordnet ist.

Die dem Gutleitelement 22 zugeordnete wenigstens eine erste Gutdurchtnttsöffnung 31 erstreckt sich nur über einen Teilbereich der Breite des Gutleitelementes 22. In vertikaler Richtung ist die Höhe der Gutdurchtrittsöffnung 31 so gewählt, dass die den Dreschorganen 7 nachgeordnete Gutfördertrommel 24 zumindest einen Erntegutteilstrom 33 aus dem wenigstens teilweise auf sie treffenden Erntegutstrom 19 ableiten und der unteren Trennebene 27 zuführen kann. Dabei wird die Bewegungsrichtung des abgeleiteten Erntegutteilstroms 33 durch Verteilerklappen 43 in der Weise gesteuert, dass der Erntegutteilstrom 33 nach dem Passieren der Gutdurchtrittsöffnung 31 auf die Breite des nachgeordneten Hordenschüttlers 29 auseinandergezogen wird, Es liegt im Rahmen der Erfindung, dass die beidseitig der Gutdurchtrittsöffnurig 31 zugeordneten Verteilerklappen 43 mittels nicht näher dargestellter Verstellmittel um vertikale Schwenkachsen 44 quer zur Bewegungsrichtung des Erntegutteilstromes 33 verstellbar sind, sodass beispielsweise in Abhängigkeit von den Ernteguteigenschaften die Querverteilung des Erntegutteilstromes 33 in der zugehörigen Trennebene 27 geändert werden kann. Zur Verbesserung des Gutflusses im Bereich dieser ersten Gutdurchtrittsöffnung 31 können der Gutdurchtrittsöffnung 31 in ihren den Gutförderorganen 23 zugeordneten Bereichen Begrenzungsstege 45 zugeordnet sein, denen zur besseren Trennung des Erntegutstromes 19 in Erntegutteilströme 33, 36 Schneidkanten 46 angeformt sein können, Zudem kann die untere, in Gutflussrichtung vorgeordnete Gutdurchtrittsöffnting 31 gemäß Pfeilrichtung 48 verschiebbare seitliche Begrenzungen 47 aufweisen, sodass der Durchgangsquerschnitt und damit die Mengenanteile der Erntegutteilströme 33, 36 am ursprünglichen Erntegutstrom 19 veränderbar sind. Zur sicheren Führung des unteren Erntegutteilstromes 31 kann die Gutdurchtrittsöffnung 31 untenseitig zudem ein Führungsblech 49 aufweisen, weiches die Förderung des betreffenden Erntegutteilstromes 33 auf den ihr zugeordneten Hordenschüttler 29 unterstützt. Obgleich der aus dem Dreschbereich 6 austretende Erntegutstrom 19 eine hohe kinetische Energie aufweist, kann diese durch Reibvorgänge an den erfindungsgemäßen Gutleitelementsegmenten 22a, 22b teilweise verloren gehen, sodass es sinnvoll sein kann, dass die Gutleittrommel 24 den Erntegutstrom 19 und/oder die aus ihm gebildeten Erntegutteilströme 33, 36 im dem Durchgangsspalt 50 zwischen der Gutleittrommel 24 und dem Gutleitelement 22 beschleunigt, Gemäß Figur 2 kann dies im einfachsten Fall dadurch bewirkt werden, dass die Gutleittrommel 24 und das Gutleitelement 22 relativ zueinander ihre Lage ändern können, Dies kann beispielsweise dadurch bewirkt werden, dass entweder die Gutleittrommel 24 und/oder die Gutleitelementsegmente 22a, 22b entsprechenden den Pfeilrichtungen 51 verschieb- oder verschwenkbar in dem Maschinenrahmen 40 des Mähdreschers 2 angeordnet sind.

Oberhalb des dem Gutleitelement 22 obenseitig angeformten Führungssteg 41 und dem diesen gegebenenfalls zugeordneten Führungsrechen 42 ergibt sich der weitere Gutdurchtrittsbereich 26. Dessen Gutdurchtrittsöffnung 32 wird untenseitig, wie bereits beschrieben, von dem Führungssteg 41 und dem Führungsrechen 42 begrenzt Obenseitig ist dieser Gutdurchtrittsbereich 26 von einer Leitschienen 52 aufweisenden Verteilerhaube 53 begrenzt, sodass die diese Gutdurchtrittsöffnung 32 passierenden Emtegutteilströme 36 gleichmäßig über die Breite dieser Trennebene 28 verteilbar sind. Die Leitschienen 52 sind dabei in einer bevorzugten Ausführungsform einstellbar, sodass der Querverteilungseffekt auch in Abhängigkeit von den Erntesuteigenschaften änderbar ist Der in diesem oberen Gutdurchtrittsbereich 26 geförderte Erntegutteilstrom 36 setzt sich aus einem rechtsseitigen und einem linksseitigen Emtegutteilstrom 36 zusammen Diese Struktur ergibt sich dadurch, dass diese Ernteguaeitströme 36 im Bereich der unteren Gutdurchtrittsöffnung 31 entstehen. Dies erfolgt in der Weise, dass die Gutfördertrommel 24 einen Erntegutteilstrom 33 aus dem ursprünglichen Erntegutstrom 19 abführt und die verbleibenden Teile, die weiteren Erntegutteilströme 36, entlang der verschlossenen Abschnitte 54 des erfindungsgemäßen Gutleitelementes 22 in den nachgeordneten Gutdurchtrittsbereich 26 gefördert werden. Da diese Erntegutteilströme 36 nun in der zugehörigen Trennebene 28 aus den Randbereichen dieser Trennebene 28 in die Mitte verlagert werden müssen, weisen die Leitschienen 52 eine zur Mitte dieser Trennebene 28 gerichtete Orientierung auf.

Indem das erfindungsgemäße Gutleitelement 22 zudem so den Außenkonturen der Dreschorgane 7 und der Gutförderorgane 23 folgt, dass sich eine in vertikaler Richtung geneigte Lage des Gutleitelementes 22 ergibt, wird zudem sichergestellt, dass das Erntegut ohne energieintensive Gutumlenkvorgänge entlang des Gutleitelementes 22 gefördert werden kann.

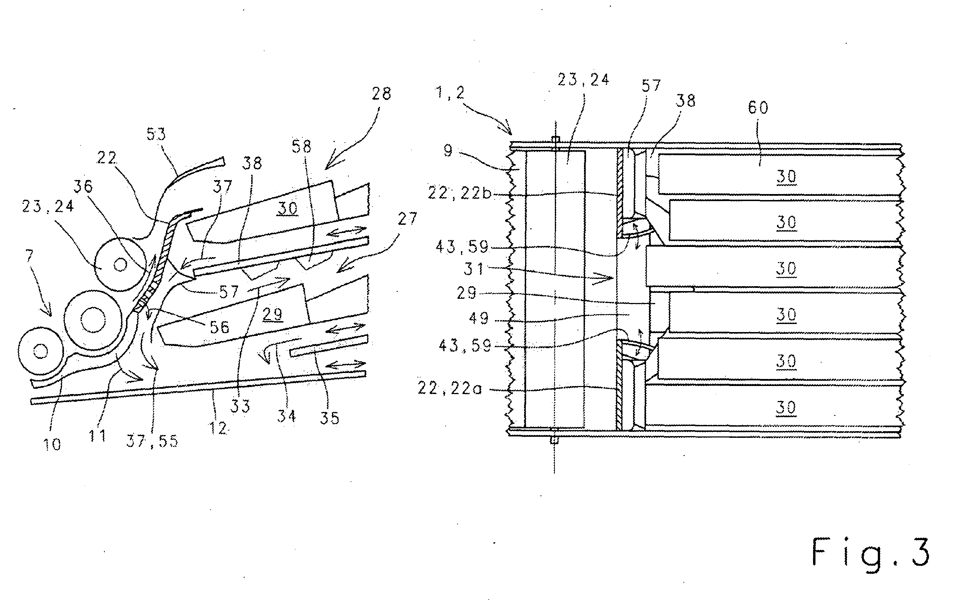

Um die Abscheideleistung eines mehrere Trennebenen 27, 28 aufweisenden Mähdreschers 2 weiter zu erhöhen, können die verschlossenen Abschnitte 54 des Gutleitelementes 22 auch von Korndurchtrittsöffnungen 55 durchsetzt sein, sodass in diesen Bereichen, gemäß Figur 3, ebenfalls eine Abscheidung von Körnern 56 aus den diese Abschnitte 54 durchlaufenden Erntegutteilströmen 36 erfolgen kann. Ein im einfachsten Fall trichterförmiges Körnerauffang- und Fördersystem 57 kann dann die verschiedenen körnerhaltigen Erntegutströme 56, 37 zusammenführen und an den bereits beschriebenen Vorbereitungsboden 12 übergeben, wobei diese Körnerauffang- und Fördersysteme 57 durch die jeweils noch gutstromfreien Bereiche der vorgeordneten Trennebene 27 geführt werden. Zudem können dem Rücklaufboden 38 des oberen Hordenschüttlers 30 Gutauflockerungselemente 58 zugeordnet sein, die in Abhängigkeit von der Bewegung des Rücklaufbodens 38 in den auf der darunter liegenden Trennebene 27 geförderten Erntegutteilstrom 33 eingreifen und diesen auflockern.

Es liegt im Rahmen der Erfindung, dass die beschriebene Verteilerhaube 53 und die Vefteilerklappen 43 als beliebig ausgeführte Gutverteilorgane 59 ausgeführt sein können, um die beschriebenen Effekte zu erzielen, Zudem kann der an sich bekannte und deshalb nicht näher beschriebene Umlauf der einzelnen Schüttlerhorden 60 so aufeinander abgestimmt sein, dass sich die von den Hordenschüttlern 29, 30 der Trennebenen 27, 28 hervorgerufenen Massenkräfte zumindest teilweise kompensieren.

### Bezugszeichenliste

- 1: Erntemaschine
- 2: Mähdrescher
- 3: Schrägförderer
- 4: Vorsatzgerät
- 5: Erntegutstrang
- 6: Dreschbereich
- 7: Dreschorgan
- 8: Dreschwerk
- 9: Dreschtrommel
- 10: Abscheideebene
- 11: Erntegutstrom
- 12: Vorbereitungsboden
- 13: Reinigungseinrichtung
- 14: Sieb
- 15: Gebläse
- 16: Luftströmung
- 17: Förderschnecke
- 18: Korntank
- 19: Erntegutstrom
- 20: Übergabebereich
- 21: Trennbereich
- 22: Gutleitelement
- 22a: Gutleitelementsegment
- 22b: Gutleitelementsegment
- 23: Gutförderorgan
- 24: Gutfördertrommel
- 25: Pfeilrichtung
- 26: Gutdurchtrittsbereich
- 27: Trennebene
- 28: Trennebene
- 29: Hordenschüttler
- 30: Hordenschüttler
- 31: Gutdurchtriitsöffnung
- 32: Gutdurchtrittsöffnung
- 33: Erntegutteilstrom
- 34: Erntegutstrom
- 35: Rücklaufboden
- 36: Erntegutteilstrom
- 37: Erntegutstrom
- 38: Rücklaufboden
- 39: Fixierflansch
- 40: Maschinenrahmen
- 41: Führungssteg
- 42: Führungsrechen
- 43: Verteilerklappe
- 44: Schwenkachse
- 45: Begrenzungssteg
- 46: Schneidkante
- 47: seitliche Begrenzung
- 48: Pfeilrichtung
- 49: Führungsblech
- 50: Durchgangsspalt
- 51: Pfeilrichtung
- 52: Leitschiene
- 63: Verteilerhaube
- 54: verschlossener Abschnitt
- 55: Korndurchtrittsäffnung
- 56: Körnerstrom
- 57: Körnerauffang- und Fördersystem
- 58: Gutauflockerungselement
- 59: Gutverteilorgan
- 60: Schüttlerhorde

## Patentansprüche

1. Mähdrescher zumindest einen Dreschbereich und einen Trennbereich umfassend, wobei der Dreschbereich beliebig gestaltete Dreschorgane aufweist und der Erntegutstrom den Dreschbereich in einem von den Dreschorganen und einer diese wenigstens teilweise ummantelnden Abscheideebene gebildeten Durchtrittsspalt durchläuft und im rückwärtigen Bereich der Dreschorgane an den von zwei Trennebenen gebildeten Trennbereich übergeben wird dem Dreschbereich (6) gutabgabeseitig ein mit einem in Gutflussrichtung zumindest einen ersten und einen weiteren Gutdurchtrittsbereich (26) aufweisenden Gutleitelement (22) zusammenwirkendes Gutförderorgan (23) zugeordnet ist und das Gutförderorgan (23) den Erntegutstrom (19) in der Weise umlenkt, dass jedem Gutdurchtrittsbereich (26) Ernteguttellströme (33, 36) zugeführt werden, wobei dem Gutleitelement (22) im Bereich des in Gutflussrichtung vorgeordneten ersten Gutdurchtrittsbereiches (26) und in Bewegungsrichtung des Erntegutteilstromes (33) in diesem Gutdurchtrittsbereich (26) ein Gutverteilorgan (59) zugeordnet ist,
**dadurch gekennzeichnet,**
**dass** das Gutverteilorgan (59) als Vertellerklappen (43) ausgeführt ist, welche um vertikale Schwenkachsen (44) quer zur Bewegungsrichtung des Erntegutteilstroms (33) verstellbar sind.

2. Mähdrescher zumindest einen Dreschbereich und einen Trennbereich umfassend, nach Anspruch 1,
**dadurch gekennzeichnet**
**dass** das Gutförderorgan (23) den Erntegutstrom (19) in Erntegutteilströme (33, 36) aufteilt und diese Erntegutteilströme (33, 36) wenigsten teilweise umlenkt und beschleunigt.

3. Mähdrescher zumindest einen Dreschbereich und einen Trennbereich umfassen, nach einem der vorhergehenden Ansprüche,
**dadurch gekennzeichnet,**
**dass** das Gutförderorgan (23) als umlaufend Gutleittrommel (24) ausgeführt ist.

4. Mähdrescher zumindest einen Dreschbereich und einen Trennbereich umfassend, nach einem der vorhergehenden Ansprüche,
**dadurch gekennzeichnet,**
**dass** der in Gutflussrichtung nachgeordnete weitere Gutdurchtrittsbereich (26) untenseitig wenigstens teilweise durch das Gutleitelement (22) und obenseitig wenigstens teilweise durch ein Gutverteilorgan (59) begrenzt wird.

5. Mähdrescher zumindest einen Dreschbereich und einen Trennbereich umfassend, nach einem der vorhergehenden Ansprüche,
**dadurch gekennzeichnet,**
**dass** dem Gutleitelement (22) im Bereich des in Gutflussrichtung vorgeordneten ersten Gutdurchtrittsbereiches (26) und in Bewegungsrichtung des Erntegutteilstromes (33) in diesem Gutdurchtrittsbereich (26) ein Gutverteilorgan (59) zugeordnet ist.

6. Mähdrescher zumindest einen Dreschbereich und einen Trennbereich umfassend, nach Anspruch 5,
**dadurch gekennzeichnet,**
**dass** das Gutverleilorgan (59) des vorgeordneten Gutdurchtrittsbereichs (26) als Verteilerklappen (43) und das Gutverteilorgan (59) der nachgeordneten Guidurchtnttsöffnung (26) als Verteilerhaube (53) ausgeführt ist.

7. Mähdrescher zumindest einen Dreschbereich und einen Trennbereich umfassend, nach einem der vorhergehenden Ansprüche,
**dadurch gekennzeichnet,**
**dass** die Verteilerhaube (53) Leitschienen (52) umfasst und die Lage der Leitschienen (52) und der Verteiterktappen (43) einstellbar ist.

8. Mähdrescher zumindest einen Dreschbereich und einen Trennbereich umfassend, nach einem der vorhergehenden Ansprüche,
**dadurch gekennzeichnet,**
**dass** das Gutleitelement (22) und die Gutleittrommel (24) zwischen sich einen Durchgangsspalt (50) ausbilden und der Durchgangsspalt (50) einstellbar ist.

9. Mähdrescher zumindest einen Dreschbereich und einen Trennbereich umfassend, nach Anspruch 8,
**dadurch gekennzeichnet,**
**dass** die Einstellbarkeit des Durchgangspaltes (50) durch Lageänderung (51) der Gutleittrommel (24) und/oder durch Lageänderung (51) des Gutleitelementes (22) bewirkt wird.

10. Mähdrescher zumindest einen Dreschbereich und einen Trennbereich umfassend, nach einem der vorhergehenden Ansprüche,
**dadurch gekennzeichnet,**
**dass** das Gutleitelement (22, 22a, 22b) mehrteilig ausgebildet ist.

11. Mähdrescher zumindest einen Dreschbereich und einen Trennbereich umfassend, nach einem der vorhergehenden Ansprüche,
**dadurch gekennzeichnet,**
**dass** die Abscheideebene (10) des Dreschbereich (6) als Dresch- und Abscheidekorb ausgebildet ist und die Abscheideebene (10) sich wenigstens teilweise in den Wirkbereich der Gutleittrommel (24) erstreckt und wobei das oder die Gutleitelemente (22) die Abscheideebene (10) wenigstens teilweise überdecken.

12. Mähdrescher zumindest einen Dreschbereich und einen Trennbereich umfassen, nach einem der vorhergehenden Ansprüche,
**dadurch gekennzeichnet,**
**dass** das oder die Gutleitelemente (22) wenigstens teilweise von Kornduchgangsöffnungen (55) durchsetzt sind.

13. Mähdrescher zumindest einen Dreschbereich und einen Trennbereich umfassend, nach einem der vorhergehenden Ansprüche,
**dadurch gekennzeichnet,**
**dass** der in Gutflussrichtung vorgeordnete Gutdurchtrittsbereich (26) von einer Gutdurchtrittsöffnung (31) gebildet wird, die sich über einen Teilbereich der Arbeitsbreite der Gutfördertrommel (24) erstreckt und wobei die Breite dieser Gutdurchtrittsöfnung (31) so gewählt ist, dass eine nahezu gleichmäßige Teilung des Erntegutstromes (19) in Teilerntegutströme (33, 36) für die einzelnen Trennebenen (27, 28) erfolgt.

14. Mähdrescher zumindest einen Dreschbereich und einen Trennbereich umfassend, nach Anspruch 13,
**dadurch gekennzeichnet,**
**dass** die Breite dieser Gutdurchtrittsöffnung (31) einstellbar ist.

15. Mähdrescher zumindest einen Dreschbereich und einen Trennbereich umfassend, nach einem der vorhergehenden Ansprüche,
**dadurch gekennzeichnet,**
**dass** die Trennebenen (27, 28) als Hordenschüttler (29,30) oder Trennrotoren ausgebildet sind.

16. Mähdrescher zumindest einen Dreschbereich und einen Trennbereich umfassend, nach einem der vorhergehenden Ansprüche,
**dadurch gekennzeichnet,**
**dass** die in der nachgeordneten Trennebene (28) abgeschiedenen Erntegutströme (36) jeweils im Bereich der verschlossenen Abschnitte (54) des Gutleitelementes (22) durch die vorgeordnete Trennebene (27) gefördert und nachfolgenden Arbeitsorganen zugeführt werden.

17. Mähdrescher zumindest einen Dreschbereich und einen Trennbereich umfassend, nach einem der vorhergehenden Ansprüche,
**dadurch gekennzeichnet,**
**dass** jedem Hordenschüttler (29, 30) ein Rücklaufboden (35, 38) zugeordnet ist und der Rücklaufboden (38) der jeweils nachgeordneten Trennebene (28) im Bereich der ihm vorgeordneten Trennebene (27) entsprechend den verschlossenen Abschnitten (54) des Gutleitelementes (22) in dieser Trennebene (27) geteilt ausgeführt ist:

18. Mähdrescher zumindest einen Dreschbereich und einen Trennbereich umfassend, nach einem der vorhergehenden Ansprüche,
**dadurch gekennzeichnet,**
**dass** jeweils dem Rücklaufboden (38) eines Hordenschüttlers (30) einer nachgeordneten Trennebene (28) Gutauflockerungselemente (58) für die Erntegutteilströme (33) der vorgeordneten Trennebene (27) untenseitig zugeordnet sind.

19. Mähdrescher zumindest einen Dreschbereich und einen Trennbereich umfassend, nach einem der vorhergehenden Anspruche,
**dadurch gekennzeichnet,**
**dass** die Bewegung der die Trennebenen (27, 28) bildenden Hordenschüttler (29, 30) so aufeinander abgestimmt ist, dass sich eine zumindest teilweise Massenkräftekompensation einstellt.

20. Mähdrescher zumindest einen Dreschbereich und einen Trennbereich umfassend, nach einem der vorhergehenden Ansprüche,
**dadurch gekennzeichnet,**
**dass** die Erntegutteilströme (33, 36) der einzelnen Trennebenen (27, 28) einer gesonderten Verwertung zugeführt werden.

## Claims

1. A combine harvester including at least a threshing region and a separating region, wherein the threshing region has threshing members of any configuration and the flow of crop material passes through the threshing region in a passage gap formed by the threshing members and a separation plane which at least partially surrounds same and in the rearward region of the threshing members is transferred to the separating region formed by two separating planes, a material conveyor member (23) co-operating with a material guide element (22) having at least a first and a further material passage region (26) in the material flow direction is associated at the material discharge side with the threshing region (6) and the material conveyor member (23) deflects the flow of crop material (19) in such a way that crop material partial flows (33, 36) are fed to each material passage region (26), wherein a material distributor member (59) is associated with the material guide element (22) in the region of the first material passage region (26) arranged upstream in the material flow direction and in the direction of movement of the crop material partial flow (33) in said material passage region (26),
**characterised in that**
the material distributor member (59) is in the form of a distributor flap (43) displaceable about vertical pivot axes (44) transversely relative to the direction of movement of the crop material partial flow (33).

2. A combine harvester including at least a threshing region and a separating region according to claim 1 **characterised in that** the material conveyor member (23) divides the crop material flow (19) into crop material partial flows (33, 36) and at least partially deflects said crop material partial flows (33, 36) and accelerates same.

3. A combine harvester including at least a threshing region and a separating region according to one of the preceding claims **characterised in that** the material conveyor member (23) is in the form of a circulating material guide drum (24).

4. A combine harvester including at least a threshing region and a separating region according to one of the preceding claims **characterised in that** the further material passage region (26) arranged downstream in the material flow direction is delimited at the underside at least partially by the material guide element (22) and at the top side at least partially by a material distributor member (59).

5. A combine harvester including at least a threshing region and a separating region according to one of the preceding claims **characterised in that** a material distributor member (59) is associated with the material guide element (22) in the region of the first material passage region (26) arranged upstream in the material flow direction and in the direction of movement of the crop material partial flow (33) in said material passage region (26).

6. A combine harvester including at least a threshing region and a separating region according to claim 5 **characterised in that** the material distributor member (59) of the upstream-disposed material passage region (26) is in the form of distributor flaps (43) and the material distributor member (59) of the downstream-disposed material passage opening (26) is in the form of a distributor hood (53).

7. A combine harvester including at least a threshing region and a separating region according to one of the preceding claims **characterised in that** the distributor hood (53) includes guide bars (52) and the position of the guide bars (52) and the distributor flaps (43) is adjustable.

8. A combine harvester including at least a threshing region and a separating region according to one of the preceding claims **characterised in that** the material guide element (22) and the material guide drum (24) form a passage gap (50) between them and the passage gap (50) is adjustable.

9. A combine harvester including at least a threshing region and a separating region according to claim 8 **characterised in that** the adjustability of the passage gap (50) is effected by a change in position (51) of the material guide drum (24) and/or by a change in position (51) of the material guide element (22).

10. A combine harvester including at least a threshing region and a separating region according to one of the preceding claims **characterised in that** the material guide element (22, 22a, 22b) is of a multi-part structure.

11. A combine harvester including at least a threshing region and a separating region according to one of the preceding claims **characterised in that** the separation plane (10) of the threshing region (6) is in the form of a threshing and separation concave and the separation plane (10) extends at least partially into the operative region of the material guide drum (24) and wherein the material guide element or elements (22) at least partially cover over the separation plane (10).

12. A combine harvester including at least a threshing region and a separating region according to one of the preceding claims **characterised in that** grain passage openings (55) at least partially pass through the material guide element or elements (22).

13. A combine harvester including at least a threshing region and a separating region according to one of the preceding claims **characterised in that** the material passage region (26) disposed upstream in the material flow direction is formed by a material passage opening (31) extending over a partial region of the working width of the material conveyor drum (24) and wherein the width of said material passage opening (31) is so selected that almost uniform division of the crop material flow (19) into partial crop material flows (33, 36) is effected for the individual separating planes (27, 28).

14. A combine harvester including at least a threshing region and a separating region according to claim 13 **characterised in that** the width of said material passage opening (31) is adjustable.

15. A combine harvester including at least a threshing region and a separating region according to one of the preceding claims **characterised in that** the separating planes (27, 28) are in the form of straw walkers (29, 30) or separating rotors.

16. A combine harvester including at least a threshing region and a separating region according to one of the preceding claims **characterised in that** the crop material flows (36) separated in the downstream-disposed separating plane (28) are respectively conveyed in the region of the closed portions (54) of the material guide element (22) through the upstream-disposed separating plane (27) and fed to following working members.

17. A combine harvester including at least a threshing region and a separating region according to one of the preceding claims **characterised in that** a return tray (35, 38) is associated with each straw walker (29, 30) and the return tray (38) of the respectively associated separating plane (28), in the region of the separating plane (27) arranged upstream thereof, is of a divided configuration in accordance with the closed portions (54) of the material guide element (22) in said separating plane (27).

18. A combine harvester including at least a threshing region and a separating region according to one of the preceding claims **characterised in that** material loosening elements (58) for the crop material partial flows (33) of the upstream-disposed separating plane (27) are associated at the underside with the respective return tray (38) of a straw walker (30) of a downstream-disposed separating plane (28).

19. A combine harvester including at least a threshing region and a separating region according to one of the preceding claims **characterised in that** the movement of the straw walkers (29, 30) forming the separating planes (27, 28) is so matched to each other that at least partial inertia force compensation occurs.

20. A combine harvester including at least a threshing region and a separating region according to one of the preceding claims **characterised in that** the crop material partial flows (33, 36) of the individual separating planes (27, 28) are fed to a separate use.

## Revendications

1. Moissonneuse-batteuse comprenant au moins une zone de battage et une zone de séparation, la zone de battage comportant des organes de battage de forme quelconque et le flux de produit de récolte traversant la zone de battage dans une fente de passage formée par les organes de battage et un plan de séparation qui entoure ceux-ci au moins partiellement et étant transféré, dans la partie arrière des organes de battage, à la zone de séparation formée par deux plans de séparation, un organe de transport de produit (23) qui coopère avec un élément de guidage de produit (22) présentant au moins une première et une autre zone de passage de produit (26) dans la direction du flux de produit étant associé à la zone de battage (6) côté décharge du produit, et l'organe de transport de produit (23) déviant le flux de produit de récolte (19) de telle manière que des flux partiels de produit de récolte (33, 36) soient amenés à chaque zone de passage de produit (26), un organe de répartition de produit (59) étant associé à l'élément de guidage de produit (22) au niveau de la première zone de passage de produit (26) placée en amont dans la direction du flux de produit et dans la direction de déplacement du flux partiel de produit de récolte (33) dans cette zone de passage de produit (26), **caractérisée en ce que** l'organe de répartition de produit (59) est réalisé sous la forme de volets de répartition (43) qui sont réglables perpendiculairement à la direction de déplacement du flux partiel de produit de récolte (33) autour d'axes de pivotement verticaux (44).

2. Moissonneuse-batteuse comprenant au moins une zone de battage et une zone de séparation, selon la revendication 1, **caractérisée en ce que** l'organe de transport de produit (23) divise le flux de produit de récolte (19) en flux partiels de produit de récolte (33, 36) et dévie et accélère au moins partiellement ces flux partiels de produit de récolte (33, 36).

3. Moissonneuse-batteuse comprenant au moins une zone de battage et une zone de séparation, selon l'une des revendications précédentes, **caractérisée en ce que** l'organe de transport de produit (23) est réalisé sous la forme d'un tambour de guidage de produit rotatif (24).

4. Moissonneuse-batteuse comprenant au moins une zone de battage et une zone de séparation, selon l'une des revendications précédentes, **caractérisée en ce que** l'autre zone de passage de produit (26) placée en aval dans la direction du flux de produit est limitée, du côté inférieur, au moins partiellement par l'élément de guidage de produit (22) et, du côté supérieur, au moins partiellement par un organe de répartition de produit (59).

5. Moissonneuse-batteuse comprenant au moins une zone de battage et une zone de séparation, selon l'une des revendications précédentes, **caractérisée en ce qu'**un organe de répartition de produit (59) est associé à l'élément de guidage de produit (22) au niveau de la première zone de passage de produit (26) placée en amont dans la direction du flux de produit et dans la direction de déplacement du flux partiel de produit de récolte (33) dans cette zone de passage de produit (26).

6. Moissonneuse-batteuse comprenant au moins une zone de battage et une zone de séparation, selon la revendication 5, **caractérisée en ce** l'organe de répartition de produit (59) de la zone de passage de produit (26) placée en amont est réalisé sous la forme de volets de répartition (43), et l'organe de répartition de produit (59) de l'ouverture de passage de produit (26) placée en aval est réalisé sous la forme d'une coiffe de répartition (53).

7. Moissonneuse-batteuse comprenant au moins une zone de battage et une zone de séparation, selon l'une des revendications précédentes, **caractérisée en ce que** la coiffe de répartition (53) comprend des rails de guidage (52), et que la position des rails de guidage (52) et des volets de répartition (43) est réglable.

8. Moissonneuse-batteuse comprenant au moins une zone de battage et une zone de séparation, selon l'une des revendications précédentes, **caractérisée en ce que** l'élément de guidage de produit (22) et le tambour de guidage de produit (24) forment entre eux une fente de passage (50) et que la fente de passage (50) est réglable.

9. Moissonneuse-batteuse comprenant au moins une zone de battage et une zone de séparation, selon la revendication 8, **caractérisée en ce que** la possibilité de réglage de la fente de passage (50) est obtenue par changement de position (51) du tambour de guidage de produit (24) et/ou par changement de position (51) de l'élément de guidage de produit (22).

10. Moissonneuse-batteuse comprenant au moins une zone de battage et une zone de séparation, selon l'une des revendications précédentes, **caractérisée en ce que** l'élément de guidage de produit (22, 22a, 22b) est réalisé en plusieurs parties.

11. Moissonneuse-batteuse comprenant au moins une zone de battage et une zone de séparation, selon l'une des revendications précédentes, **caractérisée en ce que** le plan de séparation (10) de la zone de battage (6) est configuré en contre-batteur/panier-grille et que le plan de séparation (10) s'étend au moins partiellement dans la zone d'action du tambour de guidage de produit (24), le ou les élément(s) de guidage de produit (22) recouvrant au moins partiellement le plan de séparation (10).

12. Moissonneuse-batteuse comprenant au moins une zone de battage et une zone de séparation, selon l'une des revendications précédentes, **caractérisée en ce que** le ou les éléments de guidage de produit (22) sont pourvus au moins partiellement d'ouvertures de passage de grains (55).

13. Moissonneuse-batteuse comprenant au moins une zone de battage et une zone de séparation, selon l'une des revendications précédentes, **caractérisée en ce que** la zone de passage de produit (26) placée en amont dans la direction du flux de produit est formée par une ouverture de passage de produit (31) qui s'étend sur une zone partielle de la largeur de travail du tambour de transport de produit (24), la largeur de cette ouverture de passage de produit (31) étant choisie de façon que le flux de produit de récolte (19) soit divisé de manière à peu près égale en flux partiels de produit de récolte (33, 36) pour les différents plans de séparation (27, 28).

14. Moissonneuse-batteuse comprenant au moins une zone de battage et une zone de séparation, selon la revendication 13, **caractérisée en ce que** la largeur de cette ouverture de passage de produit (31) est réglable.

15. Moissonneuse-batteuse comprenant au moins une zone de battage et une zone de séparation, selon l'une des revendications précédentes, **caractérisée en ce que** les plans de séparation (27, 28) sont réalisés sous la forme de secoueurs à claies (29, 30) ou de rotors de séparation.

16. Moissonneuse-batteuse comprenant au moins une zone de battage et une zone de séparation, selon l'une des revendications précédentes, **caractérisée en ce que** les flux de grains séparés (36) dans le plan de séparation (28) placé en aval sont transportés chaque fois dans la zone des portions fermées (54) de l'élément de guidage de produit (22) par le plan de séparation placé en amont (27) et amenés à des organes de travail suivants.

17. Moissonneuse-batteuse comprenant au moins une zone de battage et une zone de séparation, selon l'une des revendications précédentes, **caractérisée en ce qu'**une table de retour (35, 38) est associée à chaque secoueur à claies (29, 30), et **en ce que** la table de retour (38) du plan de séparation (28) placé en aval est réalisée, dans la zone du plan de séparation (27) placé en amont de celle-ci, en plusieurs parties selon les portions fermées (54) de l'élément de guidage de produit (22) dans ce plan de séparation (27).

18. Moissonneuse-batteuse comprenant au moins une zone de battage et une zone de séparation, selon l'une des revendications précédentes, **caractérisée en ce qu'**à la table de retour (38) d'un secoueur à claies (30) d'un plan de séparation (28) placé en aval sont chaque fois associés, du côté inférieur, des éléments de décompactage de produit (58) pour les flux partiels de produit de récolte (33) du plan de séparation (27) placé en amont.

19. Moissonneuse-batteuse comprenant au moins une zone de battage et une zone de séparation, selon l'une des revendications précédentes, **caractérisée en ce que** le mouvement des secoueurs à claies (29, 30) formant les plans de séparation (27, 28) est coordonné de façon que se produise une compensation au moins partielle des forces d'inertie.

20. Moissonneuse-batteuse comprenant au moins une zone de battage et une zone de séparation, selon l'une des revendications précédentes, **caractérisée en ce que** les flux partiels de produit de récolte (33, 36) des différents plans de séparation (27, 28) font l'objet d'un traitement distinct.
